(19) Europäisches Patentamt
European Patent Office
Office européen des brevets

(11) EP 0 968 472 B1

(12) **EUROPÄISCHE PATENTSCHRIFT**

(45) Veröffentlichungstag und Bekanntmachung des Hinweises auf die Patenterteilung:
**04.04.2001 Patentblatt 2001/14**

(21) Anmeldenummer: **98907855.5**

(22) Anmeldetag: **23.01.1998**

(51) Int Cl.[7]: **G06F 17/40**

(86) Internationale Anmeldenummer:
**PCT/DE98/00209**

(87) Internationale Veröffentlichungsnummer:
**WO 98/41928 (24.09.1998 Gazette 1998/38)**

(54) **VERFAHREN UND VORRICHTUNG ZUR RECHNERGESTÜTZTEN EXTRAKTION STATISCH UNABHAENGIGER DIGITALER SIGNALE AUS DIGITALEN EINGANGSSIGNALEN**

METHOD AND APPARATUS FOR COMPUTER-ASSISTED EXTRACTION OF STATISTICALLY INDEPENDENT DIGITAL SIGNALS FROM DIGITAL SIGNALS

PROCEDE ET APPAREIL D'EXTRACTION ASSISTEE PAR ORDINATEUR DE SIGNAUX NUMERIQUES STATISTIQUEMENT INDEPENDANTS A PARTIR DE SIGNAUX D'ENTREE NUMERIQUES

(84) Benannte Vertragsstaaten:
**DE FI GB NL**

(30) Priorität: **19.03.1997 DE 19711485**

(43) Veröffentlichungstag der Anmeldung:
**05.01.2000 Patentblatt 2000/01**

(73) Patentinhaber: **SIEMENS AKTIENGESELLSCHAFT**
**80333 München (DE)**

(72) Erfinder:
- **OBRADOVIC, Dragan**
  **D-81669 München (DE)**
- **DECO, Gustavo**
  **D-80636 München (DE)**

(56) Entgegenhaltungen:
**DE-C- 19 531 388**

- **A. J. BELL ET AL: "BLIND SEPARATION AND BLIND DECONVOLUTION: AN INFORMATION-THEORETIC APPROACH" PROCEEDINGS OF THE INTERNATIONAL CONFERENCE ON ACOUSTICS, SPEECH, AND SIGNAL PROCESSING (ICASSP), Bd. 5, 9. - 12.Mai 1995, DETROIT, MI, US, Seiten 3415-3418, XP000647138**
- **D. OBRADOVIC ET AL: "Blind Signal Separation Revisited" PROCEEDINGS OF THE 36TH IEEE CONFERENCE ON DECISION AND CONTROL, Bd. 2, 10. - 12.Dezember 1997, SAN DIEGO, CA, US, Seiten 1591-1596, XP002066690**
- **A. J. BELL ET AL: "An Information-Maximization Approach to Blind Separation and Blind Deconvolution" NEURAL COMPUTATION, Bd. 7, Nr. 6, November 1995, US, Seiten 1129-1159, XP002066688 in der Anmeldung erwähnt**
- **G. MARQUES ET AL: "An Objective Function for Independence" PROCEEDINGS OF THE 1996 IEEE INTERNATIONAL CONFERENCE ON NEURAL NETWORKS (ICNN '96), Bd. 1, 3. - 6.Juni 1996, NEW YORK, NY, US, Seiten 453-457, XP002066689 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 968 472 B1

Printed by Jouve, 75001 PARIS (FR)

## Beschreibung

Die Erfindung betrifft die Extraktion statistisch unabhängiger digitaler Signale aus digitalen Eingangssignalen.

In verschiedensten technischen Gebieten besteht das Problem, statistisch unabhängige digitale Signale aus einer Menge vermischter digitaler Eingangssignale zu extrahieren. So stellt sich dieses Problem beispielsweise bei der Codierung und Übertragung digitaler Bilder, die mit Rauschen behaftet sind. In dieser Situation gilt es, die eigentliche Bildinformation von dem Signalrauschen zu trennen. Auch bei einer Vielzahl von vermischten Sprachsignalen verschiedener Sprecher tritt das Problem auf, die Sprachsignale der einzelnen Sprecher voneinander zu extrahieren und einzeln verarbeitbar zu machen. Ferner tritt auch bei digitalen Signalen eines Elektroencephalogramms (EEG) oder eines Elektrokardiograms (EKG) das Problem auf, statistisch abhängige Folgen von Abtastwerten des analogen Signals von statistisch unabhängigen Anteilen der Abtastwerte zu trennen.

Aus [1] ist ein Verfahren zur Extrahierung statistisch unabhängiger digitaler Signale aus einer Mischung digitaler Eingangssignale, die auf dem Prinzip der sog. Informationsmaximierung basiert, bekannt. Bei diesem Verfahren werden die digitalen Eingangssignale einer Transformation unter Verwendung einer Transformationsmatrix unterzogen und in einer Trainingsphase werden sich aus der Transformation ergebende Zwischensignale zur Adaption von Wahrscheinlichkeitsdichtemodellen der Zwischensignale und zur Adaption der Transformationsmatrix verwendet. Die Adaption der Wahrscheinlichkeitsdichtemodelle erfolgt durch Ermittlung der Maximum-Likelihood-Expectation (MLE) nach der folgenden Vorschrift:

$$\mathrm{MLE}\left[\log \prod_{i} f_i'\left(\underline{y}_i\right) + \left|\log \det(\underline{M})\right|\right].$$

In einer Anwendungsphase werden bei diesem Verfahren die statistisch unabhängigen digitalen Signale zu den digitalen Eingangssignalen unter Verwendung der Transformationsmatrix ermittelt.

Dieses Verfahren weist den erheblichen Nachteil auf, daß bei Verwendung der oben beschriebenen Vorschrift die numerische Umsetzung nicht möglich ist, da die oben beschriebene Vorschrift numerisch instabil ist. Dies ist darauf zurückzuführen, daß die Transformationsmatrix nicht beschränkt ist.

Die Maximum-Likelihood-Interpretation des Verfahrens aus [1] ist in [2] beschrieben.

Ferner ist ein Verfahren zur Aufteilung einer Matrix in zwei Diagonalmatrizen, einer unteren Diagonalmatrix und einer oberen Diagonalmatrix, die multipliziert wiederum die Matrix selbst ergeben, aus [3] bekannt.

Unter einen unteren Dreiecksmatrix ist eine Matrix zu verstehen, die unterhalb der Hauptdiagonale der Dreiecksmatrix Werte $\neq 0$ und oberhalb der Hauptdiagonale nur Elemente mit dem Wert 0 aufeist. Im Gegensatz dazu ist unter einen oberen Dreiecksmatrix eine Matrix zu verstehen, die oberhalb der Hauptdiagonale Elemente $\neq 0$ aufweist und unterhalb der Hauptdiagonale nur Elemente mit dem Wert 0 aufweist.

Aus [4] sind ein Verfahren und eine Einrichtung zur Signaltrennung für nichtlineare Mischungen unbekannter Signale bekannt.

Der Erfindung liegt das Problem zugrunde mit Hilfe eines Rechners aus digitalen Eingangssignalen statistisch unabhängige digitale Signale zu ermitteln, wobei das Verfahren numerisch stabil und somit mit einem Rechner ohne weiteres durchführbar ist.

Das Problem wird durch das Verfahren gemäß Patentanspruch 1 gelöst.

Bei dem Verfahren zur rechnergestützten Extraktion statistisch unabhängiger digitaler Signale aus digitalen Eingangssignalen gemäß Patentanspruch 1 werden die digitalisierten Eingangssignale einer Transformation unter Verwendung einer Transformationsmatrix unterzogen. Zwischensignale, die sich aus der Transformation ergeben, werden in einer Trainingsphase zur Adaption von Modellen der Wahrscheinlichkeitsdichte der zwischensignale und zur Adaption der Transformationsmatrix verwendet. Die Adaption der Modelle der Wahrscheinlichkeitsdichte sowie der Transformationsmatrix erfolgt durch Bildung der Maximum-Likelihood-Expectation gemäß der folgenden Vorschrift:

$$\mathrm{MLE}\left[\log \prod_{i} f_i'\left(\underline{y}_i\right) + \left|\log \det(\underline{M})\right|\right],$$

wobei mit MLE die Maximal-Likelihood-Expectation bezeichnet wird.

Mit det($\underline{M}$) wird hierbei die Determinante der Transformationsmatrix bezeichnet. Die Determinante der Transformationsmatrix weist einen ersten konstanten Wert auf. In einer Anwendungsphase werden die statistisch unabhängigen digitalen Signale zu den digitalen Eingangssignalen unter Verwendung der Transformationsmatrix ermittelt.

Gemäß dem Verfahren wird erstmals ein numerisch stabiles Verfahren zur Extraktion statistisch unabhängiger Signale nach dem Prinzip der Informationsmaximierung erreicht. Somit wird erstmals eine verläßliche Realisierungsmöglichkeit des Verfahrens zur Informationsmaximierung mit Hilfe eines Rechners ermöglicht.

Anschaulich kann die Erfindung darin gesehen werden, daß die numerische Stabilität des Verfahrens zur rechnergestützten Extraktion statistisch unabhängiger Signale basierend auf dem Prinzip der Informationsmaximierung dadurch gewährleistet wird, daß die Determinante det($\underline{M}$) der Transformationsmatrix einen konstanten Wert aufweist.

Vorteilhafte Weiterbildungen der Erfindung ergeben sich aus den abhängigen Ansprüchen.

Es ist bei dem Verfahrens vorteilhaft, Modelle der Wahrscheinlichkeitsdichte zu verwenden, die ausreichend viele Freiheitsgrade aufweisen zur Approximation der Wahrscheinlichkeitsdichteverteilung der Zwischensignale. Auf diese Weise wird das Ergebnis der Extraktion statistisch unabhängiger Signale erheblich verbessert, da die Modellierung der Wahrscheinlichkeitsdichteverteilung der Zwischensignale genauer ausgeführt werden kann.

Ferner ist es in einer Weiterbildung des Verfahrens vorteilhaft, als Modelle der Wahrscheinlichkeitsdichte gaußförmige Funktionen zu verwenden, wodurch der benötigte Rechenaufwand zur Durchführung des Verfahrens erheblich reduziert wird.

Ferner ist es in einer Weiterbildung des Verfahrens vorteilhaft, die Transformationsmatrix durch Multiplikation einer unteren Dreiecksmatrix der Transformationsmatrix und einer oberen Dreiecksmatrix der Transformationsmatrix zu bilden, wobei die Dreiecksmatrizen jeweils in ihrer Hauptdiagonalen konstante Werte aufweisen. Durch diese Weiterbildung wird eine einfache und somit sehr schnell durchführbare Vorschrift angegeben, mit der gewährleistet wird, daß die Determinante der Transformationsmatrix einen konstanten Wert aufweist.

Durch die Weiterbildung des Verfahrens, daß die Dreiecksmatrizen jeweils in den Hauptdiagonalen den Wert 1 aufweisen, wird der zur Durchführung des Verfahrens erforderliche Rechenaufwand weiter reduziert.

Das Verfahren kann auf verschiedensten technischen Gebieten vorteilhafte Anwendung finden in denen es gilt, aus einer Menge vermischter digitaler Eingangssignale statistisch voneinander unabhängige digitale Signale zu bilden. So ist es vorteilhaft, das Verfahren für digitale Eingangssignale durchzuführen, die durch digitale Bildsignale gegeben sind, wobei die vermischten Bildsignale Signale verschiedener Bilder sein können. Auf diese Weise wird eine Separation vermischter Bilder in voneinander unabhängige Ursprungsbilder möglich.

Auch eine Anwendung des Verfahrens auf verrauschte digitale Signale ist sehr vorteilhaft, da auf diese Weise sehr einfach das Signalrauschen extrahiert und somit herausgefiltert werden kann.

Das Verfahren eignet sich ferner zur Separation digitaler Sprachsignale mehrerer Sprecher in die ursprünglichen einzelnen Sprachsignale der Sprecher.

Weiterhin eignet sich das Verfahren sehr gut zur Ermittlung statistisch unabhängiger Abschnitte digitaler Abtastsignale eines Elektroencephalogramms (EEG) oder auch eines Elektrokardiogramms (EKG).

In den Figuren ist ein Ausführungsbeispiel der Erfindung dargestellt, welches im weiteren näher erläutert wird.

Es zeigen

- Fig. 1 symbolisch eine Rechneranordnung, mit der digitale Bilder gemäß dem erfindungsgemäßen Verfahren verarbeitet werden;
- Fig. 2 die Rechnernanordnung, mit der eine Menge vermischter Sprachsignale gemäß dem erfindungsgemäßen Verfahren in statistisch unabhängige Sprachsignale extrahiert wird;
- Fig. 3 die Rechneranordnung zur Durchführung des Verfahrens für verschiedene Arten von Folgen digitaler Abtastwerte, die durch ein Meßgerät aufgenommen werden;
- Fig. 4 eine symbolische Darstellung des Prinzips der Informationsmaximierung;
- Fig. 5 ein Ablaufdiagramm, in dem die einzelnen Verfahrensschritte des Verfahrens dargestellt sind.

In Figur 1 ist eine Kamera K dargestellt, mit der Bilder einer Szene aufgenommen werden. Die Bilder B werden digitalisiert und als digitale Eingangssignale $\underline{x}_j$ einem Rechner R zugeführt. Je nach Anwendung stellen die digitalen Eingangssignale $\underline{x}_j$ digitale Bilder, d.h. mit Signalrauschen behaftete digitale Bildsignale oder auch eine Menge vermischter Bildsignale verschiedener Bilder B dar.

Von dem Rechner R wird in der Prozessoreinheit P das im weiteren beschriebene Verfahren zur Extraktion statistisch unabhängiger Zwischensignale $\underline{Y}_i$ aus den digitalen Eingangssignalen $\underline{x}_j$ durchgeführt. Die statistisch unabhängigen Zwischensignale $\underline{Y}_i$ sind beispielsweise die vom Rauschen getrennten digitalen Bildsignale und das Rauschsignal selbst oder auch die getrennten digitalen Bilder B. Das Ergebnis der Extraktion wird auf einem Bildschirm BS dargestellt. Mit einem ersten Index j wird jeweils jedes Eingangssignal $\underline{x}_j$ eindeutig gekennzeichnet. Mit einem zweiten Index i wird jedes statistisch unabhängige Zwischensignale $\underline{Y}_i$ eindeutig gekennzeichnet.

In Figur 2 ist die Rechneranordnung R dargestellt, die mit der Prozessoreinheit P zur Durchführung des im

weiteren beschriebenen Verfahrens mit einer Vielzahl Mikrofone Mj gekoppelt ist.

Von verschiedenen Sprechern werden Sprachsignale $S_j$ in die Mikrophone Mj eingesprochen. Die eingesprochenen Sprachsignale Sj werden vermischt, d.h. in beliebiger Weise miteinander vermengt. Von der Prozessoreinheit P werden mittels des erfindungsgemäßen Verfahrens die individuellen menschlichen Stimmen, d.h. die individuellen Sprachsignale Sj aus der Menge vermischter Sprachsignale z.B. aus unabhängigen Aufzeichnungen extrahiert. In diesem Fall sind die digitalen Eingangssignale $\underline{x}_j$ durch Sprachsignale Sj gegeben. Auch in diesem Fall kann ein Sprachsignal oder mehrere Sprachsignale mit Signalrauschen behaftet sein, welches ebenfalls durch das Verfahren extrahiert werden kann. Das Ergebnis der Extraktion der statistisch unabhängigen Zwischensignale $\underline{y}_i$ und von statistisch unabhängigen Signalen $\underline{z}_i$ wird vorzugsweise über einen Lautsprecher LS einem Benutzer zugänglich gemacht.

In Figur 3 ist eine weitere Anwendung des Verfahrens dargestellt, in der die Rechneranordnung R mit der Prozessoreinheit P mit einem Meßgerät MG gekoppelt ist, welches als Elektroencephalogramm (EEG) oder auch als Elektrokardiogramm (EKG) ausgestaltet ist.

Mit dem Meßgerät MG werden analoge Signale aufgenommen und in digitale Signale umgewandelt durch Abtastung der analogen Signale. Die Abtastwerte werden als digitale Eingangssignale $\underline{x}_j$ der Rechneranordnung R zugeführt zur weiteren Verarbeitung gemäß dem erfindungsgemäßen Verfahren. Das Ergebnis der Extraktion der digitalen Signale wird einem Benutzer vorzugsweise wiederum auf einem Bildschirm BS dargestellt.

In Fig. 4 ist das Prinzip der Informationsmaximierung symbolisch dargestellt. Eingangssignale $\underline{x}_j$ werden einer Transformation T unter Verwendung einer Transformationsmatrix $\underline{M}$ zugeführt.

Durch die Transformation T werden Zwischensignale $\underline{y}_i$ gebildet nach der Vorschrift:

$$\underline{y}_i = \underline{M} \cdot \underline{x}_j.$$

Die Transformation T ist in Fig. 5 in dem Ablaufdiagramm als erster Schritt 501 dargestellt.

In einem zweiten Schritt 502 ist dargestellt, daß sich die aus der Transformation ergebenden Zwischensignale $\underline{y}_i$ in einer Trainingsphase zur Adaption von Modellen der Wahrscheinlichkeitsdichte $\underline{f}_i'$ der Zwischensignale $\underline{y}_i$ und zur Adaption der Transformationsmatrix $\underline{M}$ verwendet werden.

Die Modelle der Wahrscheinlichkeitsdichte $\underline{f}_i'$ werden durch stochastische Schätzer, z.B. neuronale Netze, realisiert. Vorzugsweise werden zur Modellierung der Wahrscheinlichkeitsdichte $\underline{f}_i'$ der Zwischensignale $\underline{y}_i$ gaußförmige Funktionen zur Approximatin der Wahrscheinlichkeitsdichte verwendet.

Vorzugsweise weist das Modell der Wahrscheinlichkeitsdichte $\underline{f}_i'$ eine ausreichende Anzahl von Freiheitsgraden auf, damit die Wahrscheinlichkeitsdichte der Zwischensignale $\underline{y}_i$ genau genug approximiert werden kann. Auf diese Weise wird erreicht, daß die Extraktionsergebnisse einen erhöhten Verläßlichkeitsgrad aufweisen.

Die Adaption der Modelle der Wahrscheinlichkeitsdichte $\underline{f}_i$ ' und der Transformationsmatrix $\underline{M}$ erfolgt durch Bildung der Maximum-Likelihood-Expectation (MLE) gemäß der folgenden Vorschrift:

$$\mathrm{MLE}\left[\log \prod_i f_i'\left(\underline{y}_i\right) + \left|\log \det(\underline{M})\right|\right],$$

wobei

-- mit MLE die Maximal-Likelihood-Expectation bezeichnet wird, und
-- mit det($\underline{M}$) die Determinante der Transformationsmatrix $\underline{M}$ bezeichnet wird.

Dies ist in Fig. 5 als Verfahrensschritt 503 dargestellt. Die Adaption der Modelle der Wahrscheinlichkeitsdichte $\underline{f}_i'$ und der Transformationsmatrix $\underline{M}$ erfolgt unter Verwendung sog. Gradientenabstiegsverfahren, z.B. dem Backpropagation-Verfahren.

Die Determinante det ($\underline{M}$) weist einen ersten konstanten Wert auf.

Durch den konstanten Wert der Determinante det ($\underline{M}$) der Transformationsmatrix $\underline{M}$ wird gewährleistet, daß das Verfahren insgesamt numerisch stabil ist.

Der erste konstante Wert der Determinante det($\underline{M}$) wird vorzugsweise dadurch erreicht, daß sich die Transformationsmatrix ($\underline{M}$) aus einem Produkt einer unteren Dreiecksmatrix $\underline{L}$ der Transformationsmatrix ($\underline{M}$) und einer oberen Dreiecksmatrix $\underline{U}$ der Transformationsmatrix ($\underline{M}$) ergibt. Die Transformationsmatrix ($\underline{M}$) ergibt sich demnach gemäß folgender Vorschrift:

$$\underline{M} = \underline{L} \cdot \underline{U} \quad (3).$$

Die untere Dreiecksmatrix $\underline{L}$ und die obere Dreiecksmatrix $\underline{U}$ weisen vorzugsweise in den Elementen der Hauptdiagonalen einen zweiten konstangen Wert auf. Der zweite konstante Wert weist vorzugsweise den Wert 1 auf, wodurch gewährleistet ist, daß die Determinante det($\underline{M}$) ebenfalls den ersten konstanten Wert mit Wert 1 aufweist. Dadurch wird erreicht, daß der Logarithmus der Determinante log(det($\underline{M}$)) den Wert 0 aufweist, so daß dieser Term im Rahmen des Verfahrens nicht weiter berücksichtigt werden muß. Auf diese Weise wird eine Rechenzeiteinsparung bei der Durchführung des Verfahrens erreicht.

In einem letzten Schritt 504 werden in einer Anwendungsphase zu den Eingangssignalen $\underline{x}_j$ die statistisch unabhängigen Zwischensignale $\underline{y}_i$ unter Verwendung der Transformationsmatrix $\underline{M}$ ermittelt. Die Transformationsmatrix $\underline{M}$ enthält die Elemente, die sich nach der Adaption der Transformationsmatrix $\underline{M}$ in der Trainingsphase ergeben.

Die statistisch unabhängigen Signale $\underline{z}_i$ werden zur Weiterverarbeitung mittels des Rechners R zur Verfügung gestellt, beispielsweise zur Darstellung der Signale als Ergebnis für einen Benutzer auf einem Bildschirm BS oder einem Lautsprecher LS.

Im weiteren werden einige Varianten zu dem oben beschriebenen Ausführungsbeispiel erläutert.

Es ist für das Verfahren nicht wesentlich, welche Art digitaler Eingangssignale $\underline{x}_j$ tatsächlich verarbeitet werden. Das Verfahren ist ohne Einschränkung auf beliebige Arten vermischter digitaler Eingangssignale $\underline{x}_j$ anwendbar, bei denen es gilt, statistisch unabhängige Zwischensignale $\underline{y}_i$ aus den Eingangssignalen $\underline{x}_j$ zu extrahieren.

Ferner ist es möglich, zur Modellierung der Wahrscheinlichkeitsdichte $\underline{f}_i'$ beliebige parametrische Modelle zu verwenden. Diese müssen nicht unbedingt neuronale Netze sein.

Ferner können als Funktionen zur Bildung der Wahrscheinlichkeitsdichte außer der gaußförmigen Funktionen beliebige andere Funktionen, beispielsweise eine sigmoide Funktion oder auch eine Funktion des tanh verwendet werden.

Anschaulich kann die Erfindung darin gesehen werden, daß die numerische Stabilität des Verfahrens zur rechnergestützten Extraktion statistisch unabhängiger Signale basierend auf dem Prinzip der Informationsmaximierung dadurch gewährleistet wird, daß die Determinante det($\underline{M}$) der Transformationsmatrix $\underline{M}$ einen konstanten Wert aufweist.

Im Rahmen dieses Dokuments wurden folgende Veröffentlichungen zitiert:

[1] A. Bell und T. Sejnowski, An Informtaion Maximization Approach to Blind Separation and Blind Deconvolution, Neural Computation, Vol. 7, S. 1129 - 1159, 1995

[2] G. Marques und L. Almeida, An Objectiv Function for Independence, Proceedings of the IEEE, Int. Conference on Neural Networks, 1996

[3] G. Golub und C. van Loan, Matrix Computations, North Oxford Academic, Oxford, England, 1983

[4] DE 195 31 388 C1

**Patentansprüche**

1. Verfahren zur rechnergestützen Extraktion statistisch unabhäniger digitaler Signale $\underline{z}_i$ aus digitalen Eingangssignalen $\underline{x}_j$,

   - bei dem die Eingangssignale $\underline{x}_j$ einer Transformation $\underline{M} \cdot \underline{x}$ unter Verwendung einer Transformationsmatrix $\underline{M}$ unterzogen werden,
   - bei dem sich aus der Transformation ergebende Zwischensignale $\underline{y}_i$ in einer Trainingsphase zur Adaption von Modellen der Wahrscheinlichkeitsdichte $f'_i$ der Zwischensignale $\underline{y}_i$ und zur Adaption der Transformationsmatrix $\underline{M}$ verwendet werden,
   - bei dem die Adaption der Modelle der Wahrscheinlichkeitsdichte $f'_i$ und die Adaption der Transformationsmatrix $\underline{M}$ durch Bildung der Maximum-Likelihood Expectation der folgenden Vorschrift erfolgt:

$$MLE\left[\log \prod_i f_i'\left(\underline{y}_i\right) + \left|\log \det(\underline{M})\right|\right],$$

wobei

-- mit MLE die Maximal-Likelihood-Expectation bezeichnet wird,
-- mit det ($\underline{M}$) die Determinante der Transformationsmatrix $\underline{M}$ bezeichnet wird,
-- die Determinante det($\underline{M}$) der Transformationsmatrix M einen ersten konstanten Wert aufweist,

- bei dem in einer Anwendungsphase zu den Eingangssignalen $\underline{x}_j$ die statistisch unabhänigen Zwischensignale $\underline{z}_i$ ermittelt werden unter Verwendung der Transformationsmatrix $\underline{M}$.

**2.** Verfahren nach Anspruch 1,
bei dem die Modelle der Wahrscheinlichkeitsdichte $f_i'$ ausreichend viele Freiheitsgrade aufweisen zur Approximation der Wahrscheinlichkeitsdichteverteilung der Zwischensignale $\underline{y}_i$.

**3.** Verfahren nach Anspruch 2,
bei dem als Modelle der Wahrscheinlichkeitsdichte $f_i'$ gaußförmige Funktionen verwendet werden.

**4.** Verfahren nach einem der Ansprüche 1 bis 3,

- bei dem die Transformationsmatrix $\underline{M}$ sich ergibt aus dem Produkt der unteren Dreiecksmatrix $\underline{L}$ der Transformationsmatrix $\underline{M}$ und der oberen Dreiecksmatrix $\underline{U}$ der Transformationsmatrix $\underline{M}$, und
- bei dem die untere Dreiecksmatrix $\underline{L}$ und die obere Dreiecksmatrix $\underline{U}$ jeweils mindestens einen zweiten konstanten Wert in der Hauptdiagonale aufweisen.

**5.** Verfahren nach Anspruch 4,
bei dem die untere Dreiecksmatrix $\underline{L}$ und die obere Dreiecksmatrix $\underline{U}$ jeweils als zweiten konstanten Wert in der Hauptdiagonale den Wert 1 aufweisen.

**6.** Verfahren nach einem der Ansprüche 1 bis 5,
bei dem die Eingangssignale $\underline{x}_j$ gegeben sind durch mindestens eine der folgenden Signalarten:

- digitale Bildsignale,
- digitale Sprachsignale,
- digitale Abtastsignale eines Electroencephalogramms,
- digitale Abtastsignale eines Electrokardiogramms.

**7.** Verfahren nach Anspruch 6,
bei dem die Eingangssignale $\underline{x}_j$ ein Signalrauschen aufweisen.

**8.** Vorrichtung zur Extraktion statistisch unabhäniger digitaler Signale $\underline{z}_i$ aus digitalen Eingangssignalen $\underline{x}_j$,
mit einer Prozessoreinheit, die derart eingerichtet ist, daß

- die Eingangssignale $\underline{x}_j$ einer Transformation $\underline{M} \cdot \underline{x}$ unter Verwendung einer Transformationsmatrix $\underline{M}$ unterzogen werden,
- sich aus der Transformation ergebende Zwischensignale $\underline{y}_i$ in einer Trainingsphase zur Adaption von Modellen der Wahrscheinlichkeitsdichte $f_i'$ der Zwischensignale $\underline{y}_i$ und zur Adaption der Transformationsmatrix $\underline{M}$ verwendet werden,

-- die Adaption der Modelle der Wahrscheinlichkeitsdichte $f_i'$ und die Adaption der Transformationsmatrix $\underline{M}$ durch Bildung der Maximum-Likelihood Expectation der folgenden Vorschrift erfolgt:

$$\mathrm{MLE}\left[\log \prod_{i} f_i'\left(\underline{y}_i\right) + \left|\log \det(\underline{M})\right|\right],$$

wobei

-- mit MLE die Maximal-Likelihood-Expectation bezeichnet wird,
-- mit det($\underline{M}$) die Determinante der Transformationsmatrix $\underline{M}$ bezeichnet wird,
-- die Determinante det($\underline{M}$) der Transformationsmatrix $\underline{M}$ einen ersten konstanten Wert aufweist,

- in einer Anwendungsphase zu den Eingangssignalen $\underline{x}_j$ die statistisch unabhänigen Zwischensignale $\underline{z}_i$ ermittelt werden unter Verwendung der Transformationsmatrix $\underline{M}$.

**9.** Vorrichtung nach Anspruch 8,
bei der die Prozessoreinheit derart eingerichtet ist, daß die Modelle der Wahrscheinlichkeitsdichte $f_i'$ ausreichend viele Freiheitsgrade aufweisen zur Approximation der Wahrscheinlichkeitsdichteverteilung der Zwischensignale $\underline{y}_i$.

**10.** Vorrichtung nach Anspruch 9,
bei der die Prozessoreinheit derart eingerichtet ist, daß als Modelle der Wahrscheinlichkeitsdichte $f_i'$ gaußförmige Funktionen verwendet werden.

**11.** Vorrichtung nach einem der Ansprüche 8 bis 10, bei der die Prozessoreinheit derart eingerichtet ist, daß

- die Transformationsmatrix $\underline{M}$ sich ergibt aus dem Produkt der unteren Dreiecksmatrix $\underline{L}$ der Transformationsmatrix $\underline{M}$ und der oberen Dreiecksmatrix $\underline{U}$ der Transformationsmatrix $\underline{M}$, und
- die untere Dreiecksmatrix $\underline{L}$ und die obere Dreiecksmatrix $\underline{U}$ jeweils mindestens einen zweiten konstanten Wert in der Hauptdiagonale aufweisen.

**12.** Vorrichtung nach Anspruch 11,
bei der die Prozessoreinheit derart eingerichtet ist, daß die untere Dreiecksmatrix $\underline{L}$ und die obere Dreiecksmatrix $\underline{U}$ jeweils als zweiten konstanten Wert in der Hauptdiagonale den Wert 1 aufweisen.

**13.** Vorrichtung nach einem der Ansprüche 8 bis 12,
bei der die Prozessoreinheit derart eingerichtet ist, daß die Eingangssignale $\underline{x}_j$ gegeben sind durch mindestens eine der folgenden Signalarten:

- digitale Bildsignale,
- digitale Sprachsignale,
- digitale Abtastsignale eines Electroencephalogramms,
- digitale Abtastsignale eines Electrokardiogramms.

**14.** Vorrichtung nach Anspruch 13,
bei der die Prozessoreinheit derart eingerichtet ist, daß die Eingangssignale $\underline{x}_j$ ein Signalrauschen aufweisen.

## Claims

**1.** Method for computer-aided extraction of statistically independent digital signals $\underline{z}_i$ from digital input signals $\underline{x}_j$,

- in which the input signals $\underline{x}_j$ are subjected to a transformation $\underline{M} \cdot \underline{x}$ using a transformation matrix $\underline{M}$,
- in which intermediate signals $\underline{y}_i$ resulting from the transformation are used in a training phase for the adaptation of models of the probability density $f'_i$ of the intermediate signals $\underline{y}_i$, and for the adaptation of the transformation matrix $\underline{M}$,
- in which the adaptation of the models of the probability density $f'_i$ and the adaptation of the transformation matrix $\underline{M}$ is performed by forming the maximum-likelihood expectation of the following rule:

$$\text{MLEO}\quad [\, \log \prod_i f'_i(\underline{y}_i) + |\log \det(\underline{M})|\, ]\,,$$

where

- -- MLE denotes the maximum-likelihood expectation,
- -- det ($\underline{M}$) denotes the determinant of the transformation matrix $\underline{M}$,
- -- the determinant det($\underline{M}$) of the transformation matrix $\underline{M}$ has a first constant value, and

- in which the statistically independent intermediate signals $\underline{z}_i$ are determined using the transformation matrix $\underline{M}$ in an application phase in relation to the input signals $\underline{x}_j$.

**2.** Method according to Claim 1, in which the models of the probability density $f'_i$ have a sufficient number of degrees of freedom for the purpose of approximating the probability density distribution of the intermediate signals $\underline{y}_i$.

**3.** Method according to Claim 2, in which Gaussian functions are used as models of the probability density $f'_i$.

**4.** Method according to one of Claims 1 to 3,

- in which the transformation matrix $\underline{M}$ results from the product of the lower triangular matrix $\underline{L}$ of the transformation matrix $\underline{M}$ and the upper triangular matrix $\underline{U}$ of the transformation matrix $\underline{M}$, and
- in which the lower triangular matrix $\underline{L}$ and the upper triangular matrix $\underline{U}$ in each case have at least one second constant value on the main diagonal.

**5.** Method according to Claim 4, in which the lower triangular matrix $\underline{L}$ and the upper triangular matrix $\underline{U}$ in each case have the value 1 as second constant value on the main diagonal.

**6.** Method according to one of Claims 1 to 5, in which the input signals $\underline{x}_j$ are given by at least one of the following types of signal:

- digital image signals,
- digital voice signals,
- digital sampled signals of an electroencephalogram,
- digital sampled signals of an electrocardiogram.

**7.** Method according to Claim 6, in which the input signals $\underline{x}_j$ exhibit signal noise.

**8.** Device for extracting statistically independent digital signals $\underline{z}_i$ from digital input signals $\underline{x}_j$, having a processor unit which is set up in such a way that

- the input signals $\underline{x}_j$ are subjected to a transformation $\underline{M} \cdot \underline{x}$ using a transformation matrix $\underline{M}$,
- intermediate signals $\underline{y}_i$ resulting from the transformation are used in a training phase for the adaptation of models of the probability density $f'_i$ of the intermediate signals $\underline{y}_i$, and for the adaptation of the transformation matrix $\underline{M}$,
- the adaptation of the models of the probability density $f'_i$ and the adaptation of the transformation matrix $\underline{M}$ is performed by forming the maximum-likelihood expectation of the following rule:

$$\text{MLE}\quad [\, \log \prod_i f'_i(\underline{y}_i) + |\log \det(\underline{M})|\, ]\,,$$

where

- -- MLE denotes the maximum-likelihood expectation,
- -- det($\underline{M}$) denotes the determinant of the transformation matrix $\underline{M}$,
- -- the determinant det($\underline{M}$) of the transformation matrix $\underline{M}$ has a first constant value, and

- the statistically independent intermediate signals $\underline{z}_i$ are determined using the transformation matrix $\underline{M}$ in an application phase in relation to the input signals $\underline{x}_j$.

**9.** Device according to Claim 8, in which the processor unit is set up in such a way that the models of the probability density $f'_i$ have a sufficient number of degrees of freedom for the purpose of approximating the probability density distribution of the intermediate signals $\underline{y}_i$.

**10.** Device according to Claim 9, in which the processor unit is set up in such a way that Gaussian functions are used as models of the probability density $f'_i$.

**11.** Device according to one of Claims 8 to 10, in which the processor unit is set up in such a way that

- the transformation matrix $\underline{M}$ results from the product of the lower triangular matrix $\underline{L}$ of the transformation matrix $\underline{M}$ and the upper triangular matrix $\underline{U}$ of the transformation matrix $\underline{M}$, and
- the lower triangular matrix $\underline{L}$ and the upper triangular matrix $\underline{U}$ in each case have at least one second constant value on the main diagonal.

**12.** Device according to Claim 11, in which the processor unit is set up in such a way that the lower triangular matrix $\underline{L}$ and the upper triangular matrix $\underline{U}$ in each case have the value 1 as second constant value on the main diagonal.

**13.** Device according to one of Claims 8 to 12, in which the processor unit is set up in such a way that the input signals $\underline{x}_j$ are given by at least one of the following types of signal:

- digital image signals,
- digital voice signals,
- digital sampled signals of an electroencephalogram,
- digital sampled signals of an electrocardiogram.

**14.** Device according to Claim 13, in which the processor unit is set up in such a way that the input signals $\underline{x}_j$ exhibit signal noise.

**Revendications**

**1.** Procédé d'extraction assistée par ordinateur de signaux $\underline{z}_i$ numériques indépendants statistiquement à partir de signaux $\underline{x}_j$ d'entrée numériques,

- dans lequel on soumet les signaux $\underline{x}_j$ d'entrée à une transformation $\underline{M} \cdot \underline{x}$ en utilisant une matrice $\underline{M}$ de transformation,
- dans lequel on utilise les signaux $\underline{y}_i$ intermédiaires provenant de la transformation dans une phase d'apprentissage pour l'adaptation de modèles de la densité $\underline{f}'_i$ de probabilité des signaux $\underline{y}_i$ intermédiaires et pour l'adaptation de la matrice $\underline{M}$ de transformation,
- dans lequel on effectue l'adaptation du modèle de la densité $\underline{f}'_i$ de probabilité et l'adaptation de la matrice $\underline{M}$ de transformation par formation de l'espérance du maximum de vraisemblance ayant l'expression suivante :

$$\mathrm{MLE}\left[\log \prod_i f'_i\left(\underline{y}_i\right) + \left|\log \det(\underline{M})\right|\right],$$

dans laquelle
- on désigne par MLE l'espérance du maximum de vraisemblance,
- on désigne par det ($\underline{M}$) le déterminant de la matrice $\underline{M}$ de transformation,

  -- le déterminant det ($\underline{M}$) de la matrice $\underline{M}$ de transformation comporte une première valeur constante,

- dans lequel, dans une phase d'application aux signaux $\underline{x}_j$ d'entrée on détermine les signaux $\underline{z}_i$ intermédiaires

indépendants statistiquement en utilisant la matrice $\underline{M}$ de transformation.

**2.** Procédé suivant la revendication 1,
dans lequel les modèles de la densité $\underline{f}'_i$ de probabilité présentent des degrés de liberté suffisamment nombreux pour l'approximation de répartition de la densité de probabilité des signaux $\underline{y}_i$ intermédiaires.

**3.** Procédé suivant la revendication 2,
dans lequel on utilise comme modèle de la densité $\underline{f}'_i$ de probabilité des fonctions gaussiennes.

**4.** Procédé suivant l'une des revendications 1 à 3,

- dans lequel la matrice $\underline{M}$ de transformation provient du produit de la matrice $\underline{L}$ triangulaire inférieure de la matrice $\underline{M}$ de transformation et de la matrice $\underline{U}$ triangulaire supérieure de la matrice $\underline{M}$ de transformation, et
- dans lequel la matrice $\underline{L}$ triangulaire inférieure et la matrice $\underline{U}$ triangulaire supérieure comportent chacune au moins une deuxième constante dans la diagonale principale.

**5.** Procédé suivant la revendication 4,
dans lequel la matrice $\underline{L}$ triangulaire inférieure et la matrice $\underline{U}$ triangulaire supérieure comportent chacune comme deuxième valeur constante dans la diagonale principale la valeur 1.

**6.** Procédé suivant l'une des revendications 1 à 5,
dans lequel les signaux $\underline{x}_j$ d'entrée sont donnés par au moins l'un des types de signaux suivants :

- signaux numériques de balayage d'un électroencéphalogramme,
- signaux numériques de balayage d'un électrocardiogramme.

**7.** Procédé suivant la revendication 6,
dans lequel les signaux $\underline{x}_j$ d'entrée présentent un bruit de signal.

**8.** Dispositif d'extraction de signaux $\underline{z}_i$ numériques indépendants statistiquement à partir de signaux $\underline{x}_j$ d'entrée numériques, comprenant une unité de processeur qui est telle que

- les signaux $\underline{x}_j$ d'entrée sont soumis à une transformation $\underline{M} \cdot \underline{x}$ en utilisant une matrice $\underline{M}$ de transformation,
- les signaux $\underline{y}_i$ intermédiaires provenant de la transformation sont utilisés dans une phase d'apprentissage pour l'adaptation de modèles de la densité $\underline{f}'_i$ de probabilité des signaux $\underline{y}_i$ intermédiaires et pour l'adaptation de la matrice $\underline{M}$ de transformation,
- l'adaptation des modèles de la densité $\underline{f}'_i$ de probabilité et l'adaptation de la matrice $\underline{M}$ de transformation s'effectuent par formation de l'espérance de maximum de vraisemblance exprimée de la manière suivante :

$$\mathrm{MLE}\left[\log \prod_i f'_i(\underline{y}_i) + \left|\log \det(\underline{M})\right|\right],$$

  - -- l'espérance de maximum de vraisemblance étant désignée par MLE,
  - -- le déterminant de la matrice $\underline{M}$ de transformation étant désigné par det ($\underline{M}$),
  - -- le déterminant det ($\underline{M}$) de la matrice $\underline{M}$ de transformation présente une première valeur constante,

- dans une phase d'application aux signaux $\underline{x}_j$ d'entrée, les signaux $\underline{z}_i$ intermédiaires indépendants statistiquement sont déterminés en utilisant la matrice $\underline{M}$ de transformation.

**9.** Dispositif suivant la revendication 8,
dans lequel l'unité de processeur est telle que les modèles de la densité $\underline{f}'_i$ de probabilité présentent des degrés de liberté suffisamment nombreux pour l'approximation de la répartition de la densité de probabilité des signaux $\underline{y}_i$ intermédiaires.

**10.** Dispositif suivant la revendication 9,
dans lequel l'unité de processeur est telle qu'il est utilisé comme modèles de la densité $\underline{f'}_i$ de probabilité des fonctions gaussiennes.

**11.** Dispositif suivant l'une des revendications 8 à 10,
dans lequel l'unité de processeur est telle que

- la matrice $\underline{M}$ de transformation provient du produit de la matrice $\underline{L}$ triangulaire inférieure de la matrice $\underline{M}$ de transformation et de la matrice $\underline{U}$ triangulaire supérieure de la matrice $\underline{M}$ de transformation, et
- dans lequel la matrice $\underline{L}$ triangulaire inférieure et la matrice $\underline{U}$ triangulaire supérieure comportent chacune au moins une deuxième constante dans la diagonale principale.

**12.** Dispositif suivant la revendication 11,
dans lequel l'unité de processeur est telle que la matrice $\underline{L}$ triangulaire inférieure et la matrice $\underline{U}$ triangulaire supérieure comportent chacune comme deuxième valeur constante dans la diagonale principale la valeur 1.

**13.** suivant l'une des revendications 8 à 12,
dans lequel l'unité de processeur est telle que les signaux $\underline{x}_j$ d'entrée sont donnés par au moins l'un des types de signaux suivants :

- signaux numériques de balayage d'un électroencéphalogramme,
- signaux numériques de balayage d'un électrocardiogramme.

**14.** Dispositif suivant la revendication 13,
dans lequel l'unité de processeur est telle que les signaux $\underline{x}_j$ d'entrée comportent un bruit de signal.

FIG 1

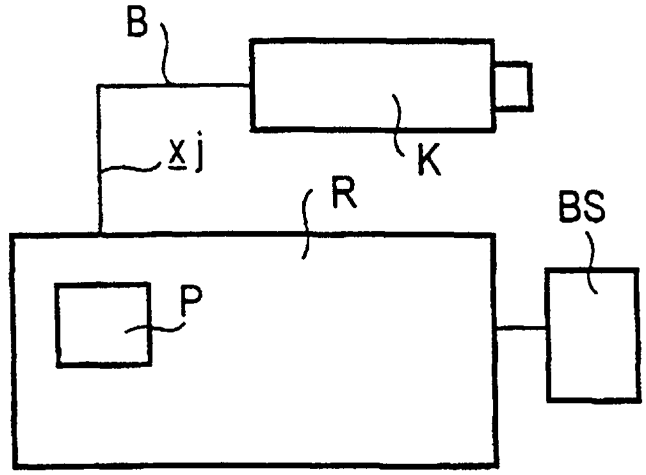


FIG 2

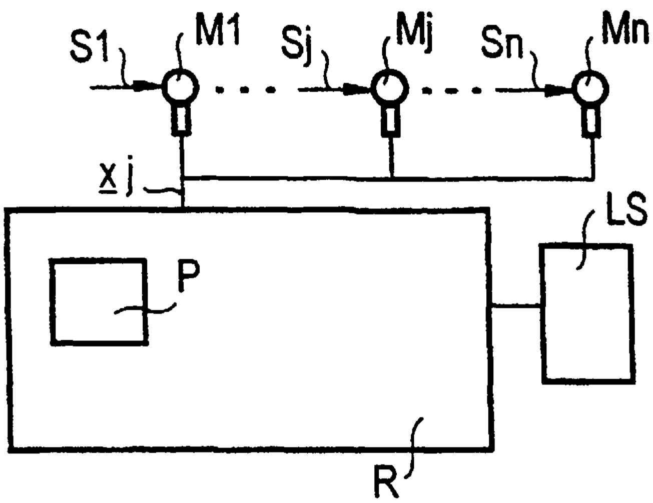

FIG 3

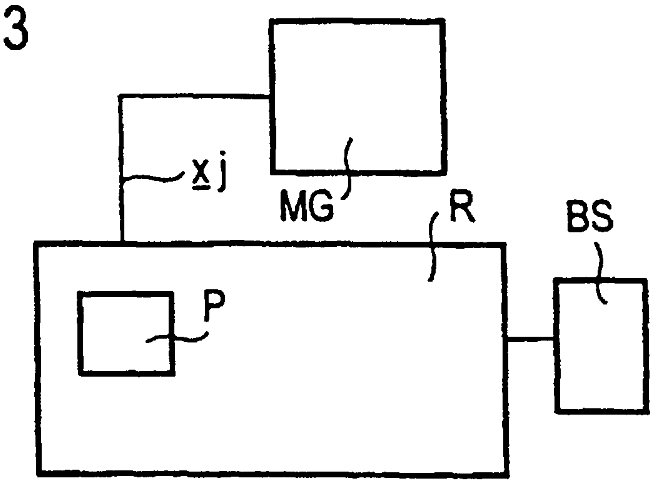


FIG 4

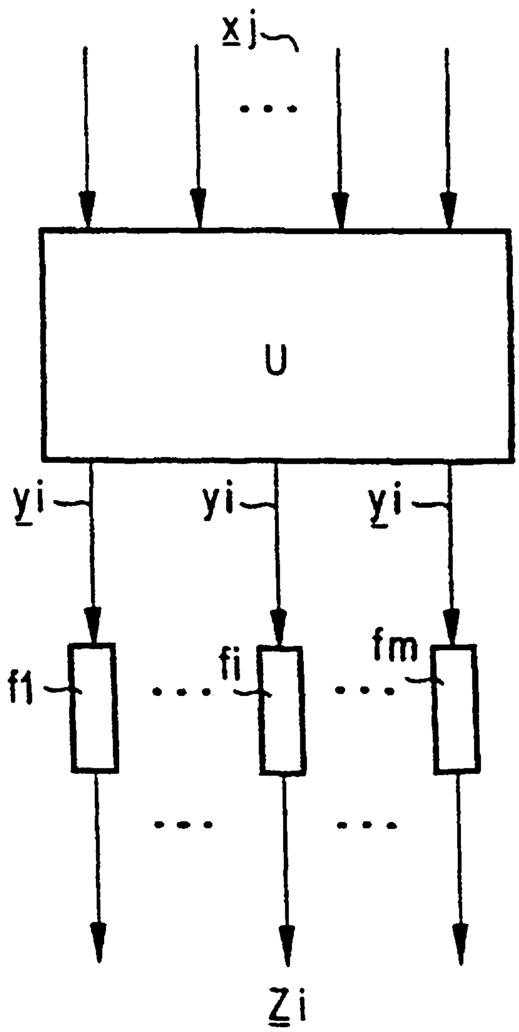

FIG 5

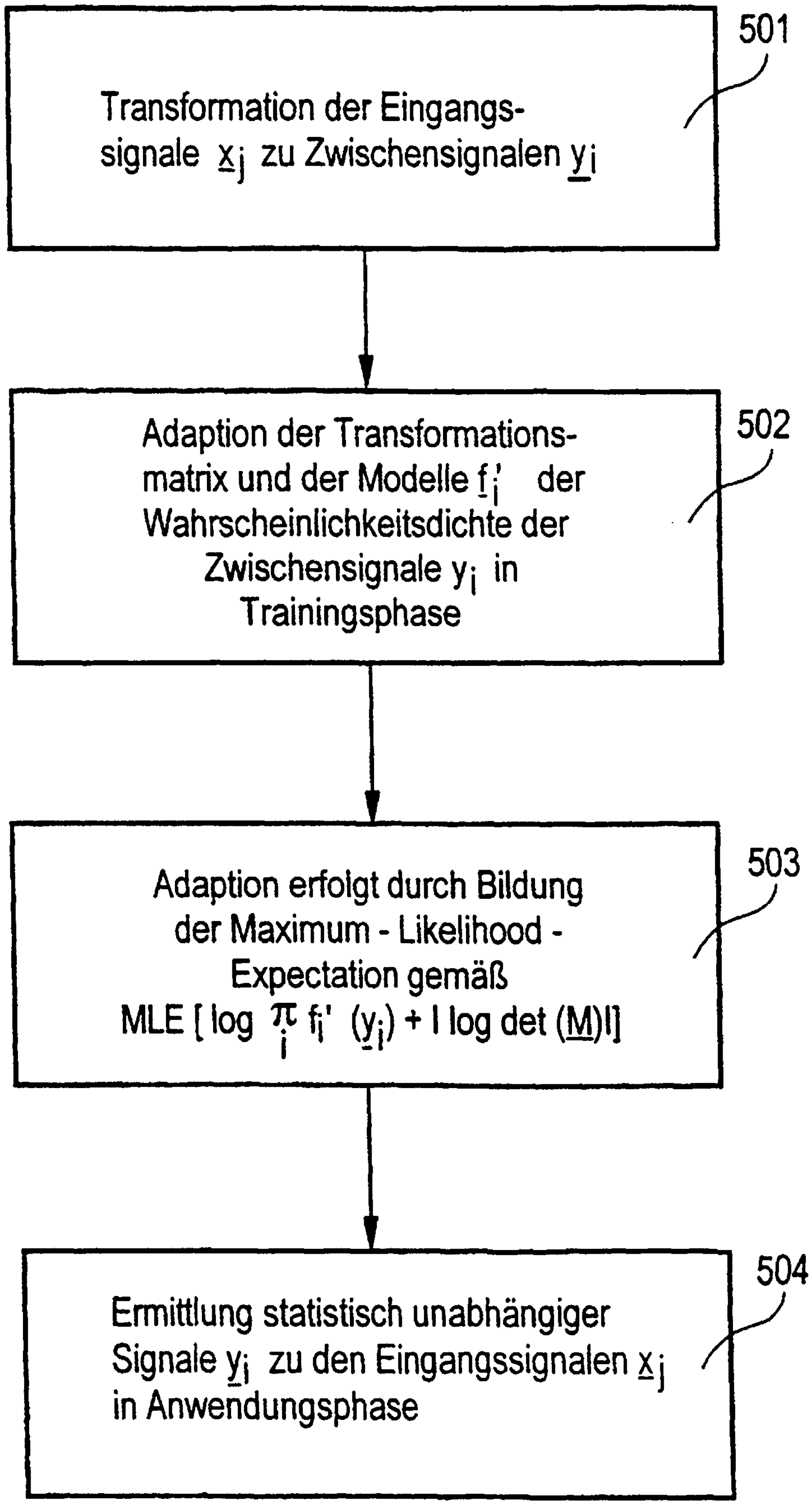
Transformation der Eingangssignale $\underline{x}_j$ zu Zwischensignalen $\underline{y}_i$
501
Adaption der Transformationsmatrix und der Modelle $\underline{f}_i'$ der Wahrscheinlichkeitsdichte der Zwischensignale $y_i$ in Trainingsphase
502
Adaption erfolgt durch Bildung der Maximum - Likelihood - Expectation gemäß
MLE [ log $\pi_i$ $f_i'$ ($\underline{y}_i$) + I log det ($\underline{M}$)I]
503
Ermittlung statistisch unabhängiger Signale $\underline{y}_i$ zu den Eingangssignalen $\underline{x}_j$ in Anwendungsphase
504